# EUROPEAN PATENT APPLICATION

(11) **EP 2 515 289 A1**
(43) Date of publication of application: **24.10.2012**
(21) Application number: 10824699.2
(22) Date of filing: 22.06.2010
(51) Int. Cl.: G09G 3/36, G02F 1/133, G09G 3/20

(54) **LCD DEVICE**

(30) Priority: 21.10.2009 JP 2009242468
(71) Applicant: Sharp Kabushiki Kaisha, Osaka-shi, Osaka 545-8522 (JP)
(72) Inventor: OKUMURA, Hiroshi, Osaka-shi, Osaka 545-8522 (JP)
(74) Representative: Müller - Hoffmann & Partner
(86) International application number: PCT/JP2010/060556
(87) International publication number: WO 2011/048847

(57) **Abstract**

An object of the present invention is to eliminate luminance unevenness due to gradation variation occurring in a plane of a division driven LCD panel. An LCD device (1) of the present invention divides a display screen into a plurality of display screens (MU, MD), a plurality of storage capacitor lines (CSH1 through CSHp and CSL1 through CSLq) being divided into a plurality of storage capacitor lines for each of the plurality of display screens (MU, MD), and a storage capacitor voltage being set individually for the each of the plurality of display screens (MU, MD), the storage capacitor voltage being applied to each of the plurality of storage capacitor lines (CSH1 through CSHp and CSL1 through CSLq).

## Description

### Technical Field

The present invention relates to an LCD device in which a voltage is applied to a storage capacitor line which is connected to a storage capacitor provided in a pixel.

### Background Art

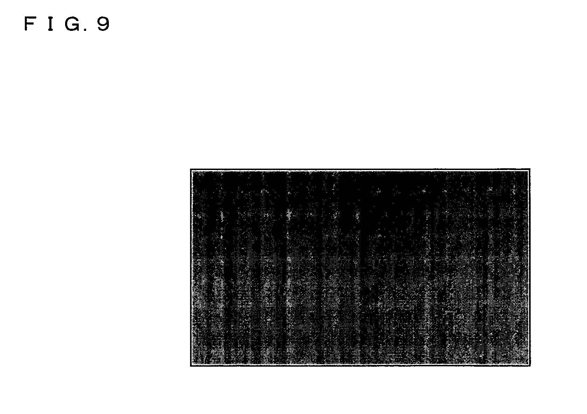

During production of large LCD panels typified by an LCD panel for a liquid crystal TV and the like, a line width, a thickness, and/or the like of a TFT substrate may vary for each LCD panel. As a result, when a low-gradation solid screen image is displayed, there may occur gradation variation due to variation in an electric characteristic of the TFT, a capacitor, and/or the like in a plane of the LCD panel with distribution. The gradation variation thus having occurred is visible as a partial luminance difference, i.e., luminance unevenness in the plane of the LCD panel (see Fig. 9).

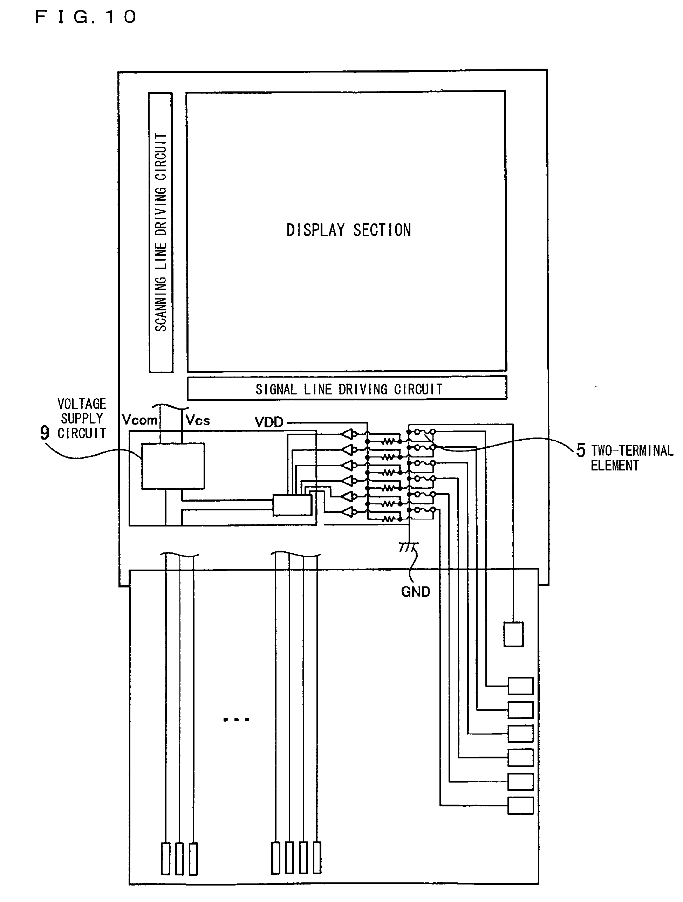

Patent Literature 1 discloses an example of a technique for reducing such gradation variation. Patent Literature 1 discloses a technique for reducing gradation variation by causing an adjustment circuit (a voltage supply circuit 9) to adjust a voltage to be applied to a storage capacitor. This point is described with reference to Fig. 10.

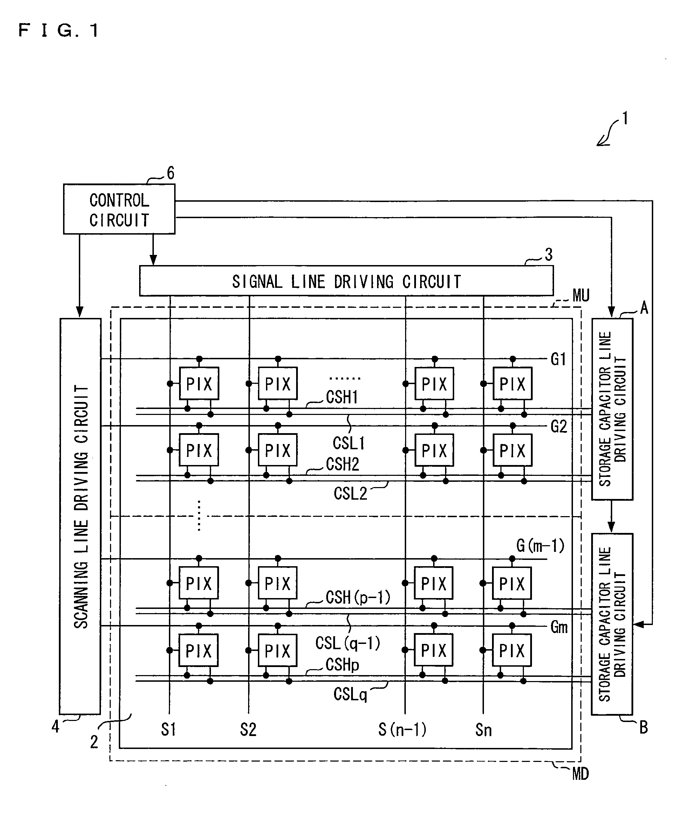

Fig. 10 is an LCD device (see Fig. 1) of Patent Literature 1. According to the LCD device of Fig. 10, a two-terminal element 5 which can change a conductive/nonconductive state from an outside is provided, and in accordance with the conductive/non-conductive state of the two-terminal element 5, the voltage supply circuit 9 causes a pixel electrode and a counter electrode to control a voltage to be applied to a liquid crystal layer. In a case where the conductive/non-conductive state of the two-terminal element 5 is changed from the outside, the voltage to be applied to the liquid crystal layer can be easily adjusted. In a case where a voltage Vcom to be applied to the counter electrode is adjusted in accordance with the conductive/nonconductive state of the two-terminal element 5, a flicker can be reduced. In a case where a voltage Vcs to be applied to the storage capacitor is adjusted in accordance with the conductive/non-conductive state of the two-terminal element 5, gradation variation can be reduced.

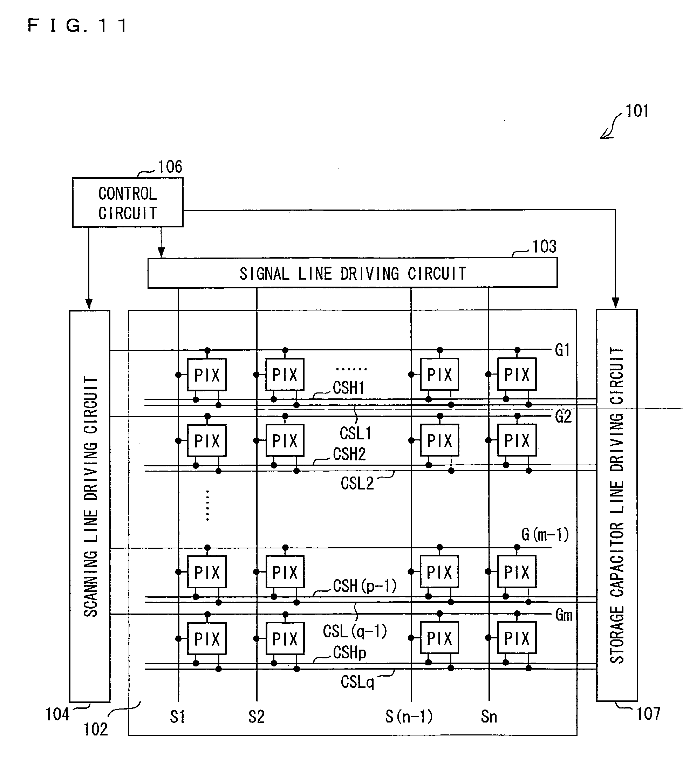

A case where the technique of Patent Literature 1 is applied to an LCD device having a common arrangement is described here with reference to Fig. 11.

Fig. 11 is a block diagram of a conventional LCD device 101. The LCD device 101 includes an LCD panel 102, a signal line driving circuit 103, a scanning line driving circuit 104, a control circuit 106, and a storage capacitor line driving circuit 107. The signal line driving circuit 103 drives signal lines S1, S2, ... S(n-1), Sn. The scanning line driving circuit 104 drives scanning lines G1, G2, ...G(m-1), Gm. The storage capacitor line driving circuit 107 drives storage capacitor lines CSH1, CSH2, ...CSH(p-1), CSHp and storage capacitor lines CSL1, CSL2, ...CSL(q-1), CSLq. Each of these storage capacitor lines is connected to a storage capacitor provided in a pixel PIX. The signal line driving circuit 103, the scanning line driving circuit 104, and the control circuit 106 constitute a display driver.

In a case where a direction in which the signal lines S1, S2, ...S(n-1), Sn extend is a column direction, a signal line is provided for each pixel column to which a plurality of pixels PIX provided in the column direction belong. In a case where a direction in which the scanning lines G1, G2, ...G(m-1), Gm extend is a row direction, a scanning line is provided for each pixel row to which a plurality of pixels PIX provided in the row direction belong.

Each pixel PIX includes a TFT (not illustrated) and two subpixels (not illustrated). The TFT has a gate which is connected to a corresponding one of the scanning lines G1, G2, ... G(m-1), Gm and a source which is connected to a corresponding one of the signal lines S1, S2, ...S(n-1), Sn. The TFT has a drain to which one of the two subpixels is connected. The one and the other of the two subpixels are connected via a coupling capacitor. One of the storage capacitor lines CSH1, CSH2, ...CSH(p-1), CSHp corresponds to the one of the two subpixels, and one of the storage capacitor lines CSL1, CSL2, ...CSL(q-1), CSLq corresponds to the other of the two subpixels. Note that two subpixels are provided for the each pixel PIX in Fig. 11. Alternatively, one, or three or more subpixels may be provided for the each pixel PIX. Further, one, or three or more storage capacitor lines may correspond to the one, or three or more subpixels provided in the each pixel PIX.

According to the LCD device 101 having the arrangement described above, gradation variation can be reduced in a case where the storage capacitor line driving circuit 107 adjusts a voltage to be supplied to each of the storage capacitor lines CSH1, CSH2, ...CSH(p-1), CSHp and a voltage to be supplied to each of the storage capacitor lines CSL1, CSL2, ...CSL(q-1), CSLq.

### Citation List

### Patent Literature

Patent Literature 1
   Japanese Patent Application Publication, Tokukai, No. 2006-235593 A (Publication Date: September 7, 2006)

### Summary of Invention

### Technical Problem

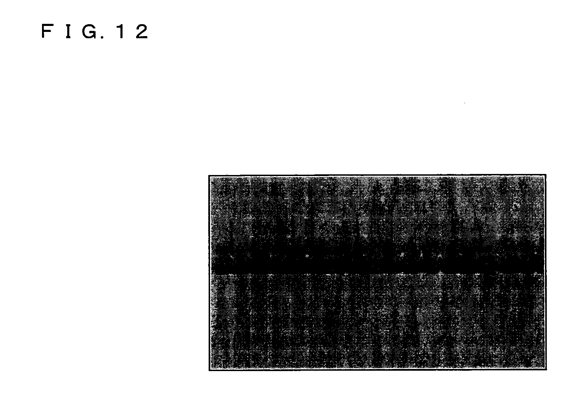

However, it is difficult to apply the conventional technique disclosed in Patent Literature 1 to a division driven LCD device in which a plane of an LCD panel is divided into a plurality of regions and driving is carried out for each of the plurality of regions obtained by the division. The following description discusses a reason for this. According to a division driven panel, luminance unevenness which is a partial luminance difference occurring in the plane of the LCD panel is visible since a panel characteristic (an electric characteristic of a TFT, a capacitor, and/or the like) varies in the plane of the LCD panel in accordance with a region obtained by the division (see Fig. 12). Even if a single voltage Vcs to be supplied to storage capacitors is adjusted in a state in which such luminance unevenness is visible (see Patent Literature 1), gradation is merely shifted in the entire LCD panel. Therefore, according to the technique of Patent Literature 1, it is impossible in the division driven LCD device to obtain a sufficient effect of reducing gradation variation occurring in the plane of the LCD panel and to prevent luminance unevenness from being visible.

The present invention has been made in view of the problems, and an object of the present invention is to provide an LCD device which allows elimination of luminance unevenness due to gradation variation occurring in a plane of even a division driven LCD panel.

### Solution to Problem

In order to attain the object, an active matrix LCD device includes: storage capacitor lines forming capacitors with pixel electrodes of respective pixels, the active matrix LCD device dividing a display screen into a plurality of display regions, the storage capacitor lines being divided into a plurality of adjacent storage capacitor lines for each of the plurality of display regions, and a storage capacitor voltage being set individually for the each of the plurality of display regions, the storage capacitor voltage being applied to each of the storage capacitor lines.

According to the invention, the storage capacitor voltage to be applied to each of the storage capacitor lines is set individually for the each of the plurality of display regions. Namely, the storage capacitor voltage to be applied to each of the storage capacitor lines can be increased/decreased (fine-adjusted) for the each of the plurality of display regions.

Therefore, since a storage capacitor can have a different value for the each of the plurality of display regions, an effective voltage to be applied to a liquid crystal capacitor is uniformed, so that variation in amount of electric charge to be charged in the liquid crystal capacitor is eliminated.

Accordingly, for example, in a case where a low gradation side halftone solid screen display is carried out, gradation variation does not occur, and luminance unevenness due to the gradation variation is invisible. Therefore, it is possible to provide an LCD device which allows elimination of luminance unevenness due to gradation variation occurring in a plane of even a division driven LCD panel.

Note that, in a case where signal electric potentials to be supplied to all the pixel electrodes are identical, the display screen is divided into the plurality of display regions in accordance with gradation variation to be displayed in the display panel.

### Advantageous Effects of Invention

As described earlier, according to an active matrix LCD device of the present invention, the active matrix LCD device divides a display screen into a plurality of display regions, storage capacitor lines are divided into a plurality of adjacent storage capacitor lines for each of the plurality of display regions, and a storage capacitor voltage is set individually for the each of the plurality of display regions, the storage capacitor voltage being applied to each of the storage capacitor lines.

Therefore, the present invention yields an effect of providing an LCD device which allows elimination of luminance unevenness due to gradation variation occurring in a plane of even a division driven LCD panel.

### Brief Description of Drawings

Fig. 1
   Fig. 1 is a block diagram of an LCD device in accordance with an example of the present invention.
Fig. 2

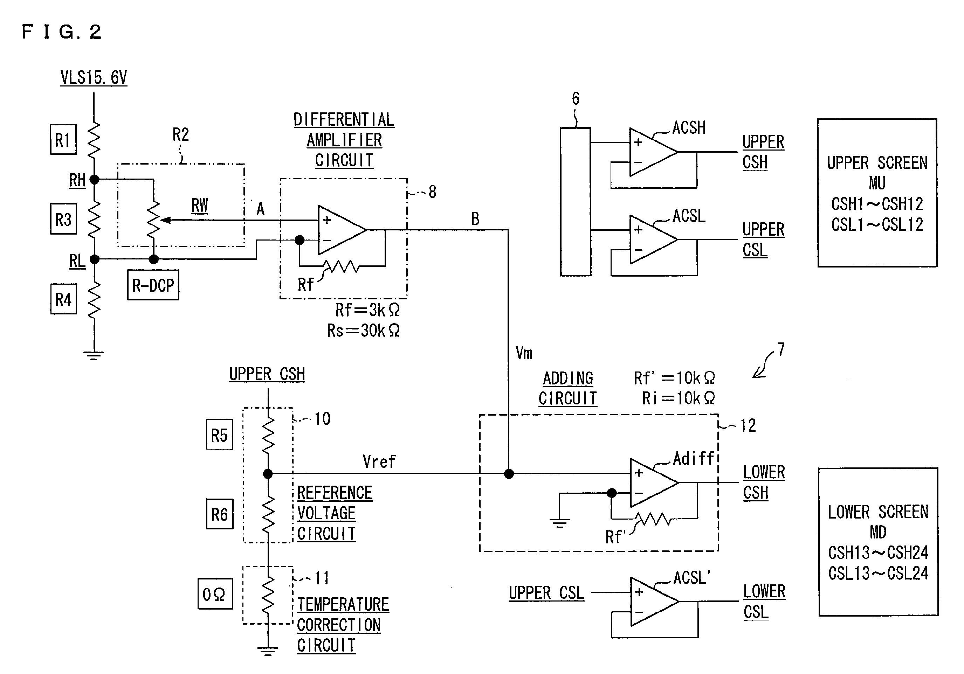

   Fig. 2 is a block diagram of a storage capacitor line driving circuit in accordance with the example of the present invention.
Fig. 3

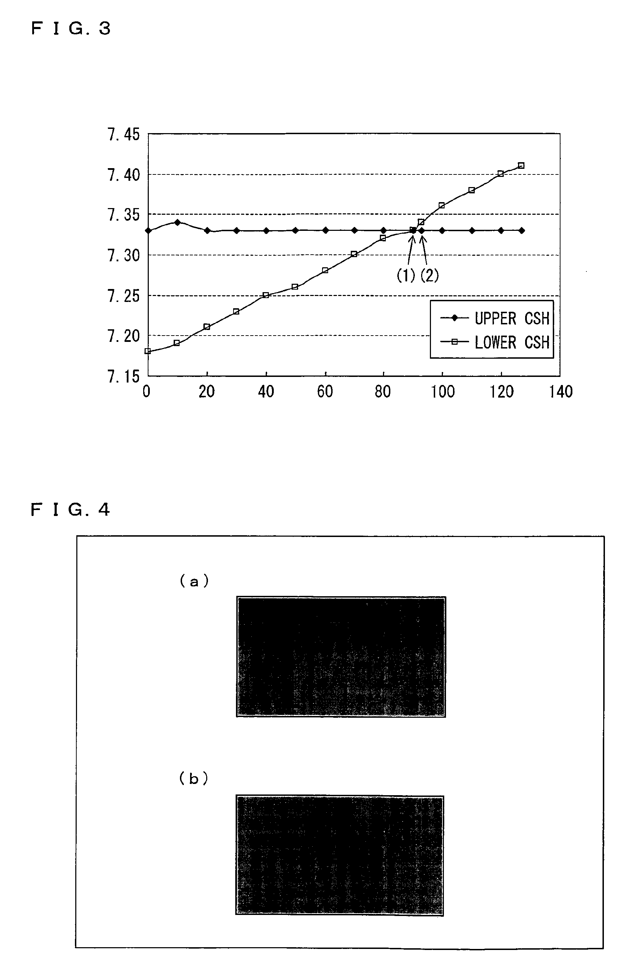

   Fig. 3 is a graph showing a result of measurement of an upper CSH voltage and a lower CSH voltage.
Fig. 4
   Fig. 4 illustrates that luminance unevenness has been eliminated in the LCD device in accordance with the example of the present invention. (a) of Fig. 4 illustrates that luminance unevenness occurs in a conventional LCD device, and (b) of Fig. 4 illustrates that luminance unevenness has been eliminated in the LCD device in accordance with the example of the present invention.
Fig. 5

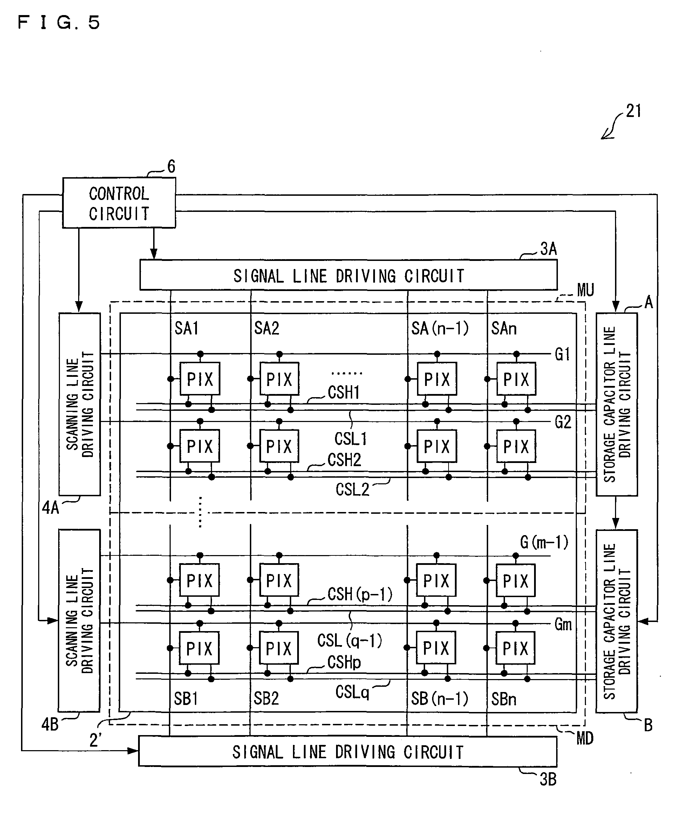

   Fig. 5 is a block diagram of an LCD device in accordance with another example of the present invention.
Fig. 6

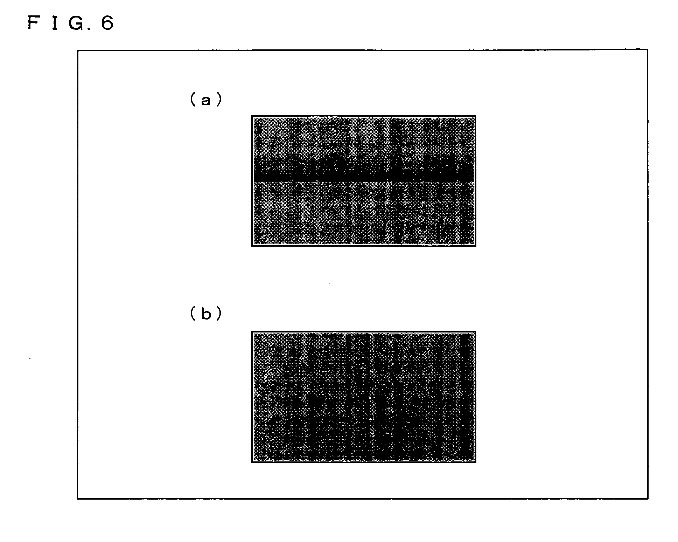

   Fig. 6 illustrates that luminance unevenness has been eliminated in the LCD device in accordance with the another example of the present invention. (a) of Fig. 6 illustrates that luminance unevenness occurs in a conventional division driven panel in which a plane of an LCD panel is divided into two upper and lower regions and driving is carried out for each of the two upper and lower regions obtained by the division, and (b) of Fig. 6 illustrates that luminance unevenness has been eliminated in the LCD device in accordance with the another example of the present invention.
Fig. 7

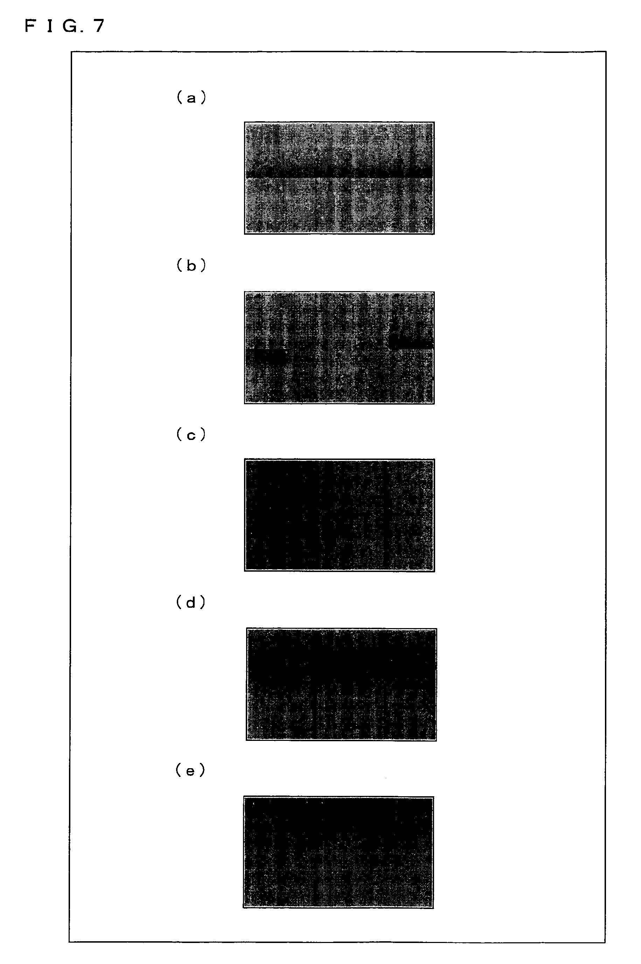

   Fig. 7 illustrates that luminance unevenness due to gradation variation occurs in a plane of an LCD panel. Each of (a) through (e) of Fig. 7 illustrates that luminance unevenness due to gradation variation occurs in a plane of an LCD panel.
Fig. 8

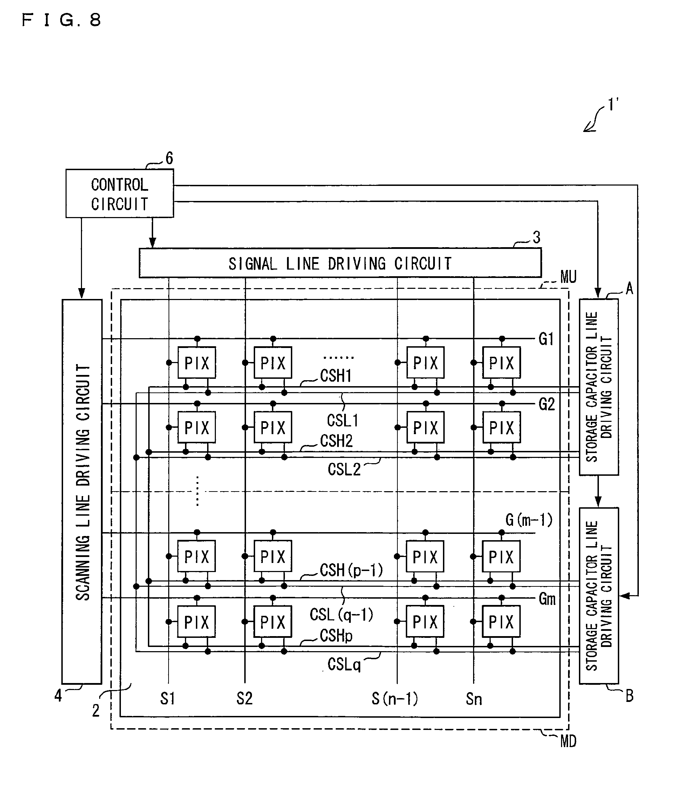

   Fig. 8 is a block diagram of a still another LCD device of the example of the present invention.
Fig. 9
   Fig. 9 illustrates that luminance unevenness due to gradation variation occurs in a plane of an LCD panel.
Fig. 10
   Fig. 10 is a block diagram of a conventional LCD device.
Fig. 11
   Fig. 11 is a block diagram of another conventional LCD device.
Fig. 12
   Fig. 12 illustrates that luminance unevenness due to gradation variation occurs in a conventional division driven panel in which a plane of an LCD panel is divided into two upper and lower regions and driving is carried out for each of the two upper and lower regions obtained by the division.

### Description of Embodiments

An embodiment of the present invention is described below with reference to First Example, Second Example, and Figs. 1 through 6. First, an example of the present invention is to be described with reference to Figs. 1 through 4.

### [First Example]

Fig. 1 is a block diagram of an LCD device 1 in accordance with the present First Example. The LCD device 1 includes an LCD panel 2, a signal line driving circuit 3 (signal line driving section), a scanning line driving circuit 4 (scanning line driving section), a control circuit 6, and storage capacitor line driving circuits (storage capacitor line driving sections) A and B. The signal line driving circuit 3 drives signal lines (a source line, each signal line) S1, S2, ... S(n-1), Sn. The scanning line driving circuit 4 drives scanning lines (a gate line, a scanning line, a first scanning line, a second scanning line, and each scanning line) G1, G2, ...G(m-1), Gm. The storage capacitor line driving circuit A and B drive (i) storage capacitor lines CSH1, CSH2, ...CSH(p-1), CSHp and (ii) storage capacitor lines CSL1, CSL2, ...CSL(q-1), CSLq, respectively. Each of these storage capacitor lines is connected to a storage capacitor provided in a pixel PIX. The signal line driving circuit 3, the scanning line driving circuit 4, and the control circuit 6 constitute a display driver.

In a case where a direction in which the signal lines S 1, S2, ...S(n-1), Sn extend is a column direction, a signal line is provided for each pixel column to which a plurality of pixels PIX provided in the column direction belong. In a case where a direction in which the scanning lines G1, G2, ... G(m-1), Gm extend is a row direction, a scanning line is provided for each pixel row to which a plurality of pixels PIX provided in the row direction belong.

The LCD panel 2 which is an active matrix LCD panel including storage capacitor lines that form capacitors with pixel electrodes of respective pixels PIX is arranged such that the pixels (liquid crystal cells) PIX are provided in a matrix pattern and the LCD panel 2 is divided into an upper screen MU (a display region, a first display region) and a lower screen MD (a display region, a second display region).

Each pixel PIX includes a TFT (not illustrated) and two subpixels (not illustrated). The TFT has a gate which is connected to a corresponding one of the scanning lines (gate lines) G1, G2, ...G(m-1), Gm that extend so as to pass through the upper screen MU or the lower screen MD and a source which is connected to a corresponding one of the signal lines (source lines) S1, S2, ...S(n-1), Sn that extend so as to pass through the upper screen MU or the lower screen MD. The TFT has a drain to which one of the two subpixels is connected. The one and the other of the two subpixels are connected via a coupling capacitor. One of the storage capacitor lines CSH1, CSH2, ...CSH(p-1), CSHp corresponds to the one of the two subpixels, and one of the storage capacitor lines CSL1, CSL2, ...CSL(q-1), CSLq corresponds to the other of the two subpixels. Accordingly, luminance unevenness can be eliminated in the LCD panel 2 in which the each pixel PIX includes two subpixels. The storage capacitor lines CSH1, CSH2, ...CSH(p-1), CSHp and the storage capacitor lines CSL1, CSL2, ...CSL(q-1), CSLq extend so as to pass through the upper screen MU or the lower screen MD.

Note that according to the LCD device 1 of Fig. 1, two storage capacitor lines are provided for each pixel PIX including two subpixels. Alternatively, the LCD device 1 may be arranged such that one, or three or more storage capacitor lines are provided for each pixel PIX including one, or three or more subpixels.

The signal line driving circuit 3 supplies image data via the signal lines S1, S2, ...S(n-1), Sn to pixels PIX to which the image data should be supplied. The scanning line driving circuit 4 selects, via the scanning lines G1, G2, ...G(m-1), Gm, pixels PIX to which the image data should be supplied. The control circuit 6 generates various signals to be supplied to the signal line driving circuit 3 and the scanning line driving circuit 4.

Internal wiring of the LCD panel 2 is continuous without being divided in the LCD panel 2. Specifically, the nth signal line Sn, which is continuous without being divided in the LCD panel 2, can supply the image data to pixels PIX including a pixel PIXn which is the farthest from the signal line driving circuit 3. Similarly, the mth scanning line Gm, which is continuous without being divided in the LCD panel 2, can select pixels PIX including a pixel PIXn which is the farthest from the scanning line driving circuit 4. The LCD panel 2 is referred to as an LCD panel which is not subjected to division drive.

The LCD device 1 includes a plurality of storage capacitor line driving circuits. The LCD device 1 includes two storage capacitor line driving circuits A and B. Alternatively, the LCD device 1 may include three or more storage capacitor line driving circuits.

According to the LCD device 1, ends of the respective storage capacitor lines CSH1, CSH2, ...CSH(p-1), CSHp are disconnected. Similarly, ends of the respective storage capacitor lines CSL1, CSL2, ...CSL(q-1), CSLq are disconnected. In a case where ends of all the respective storage capacitor lines are disconnected, a boundary of gradation variation is conspicuous before a storage capacitor voltage is set. This (i) allows easy specification of a storage capacitor line for which a storage capacitor voltage should be set and (ii) enhances an effect of adjustment by increasing/decreasing a storage capacitor voltage.

In contrast, the ends of the respective storage capacitor lines CSH1, CSH2, ...CSH(p-1), CSHp may be connected to each other in the LCD panel 2 (see an LCD device 1' of Fig. 8). Similarly, the ends of the respective storage capacitor lines CSL1, CSL2, ...CSL(q-1), CSLq may be connected to each other in the LCD panel 2 (see the LCD device 1' of Fig. 8).

The storage capacitor line driving circuits A and B are arranged such that, assuming that an output voltage of one of the storage capacitor line driving circuits A and B serves as a reference output voltage, an output voltage of the other of the storage capacitor line driving circuits A and B can be fine-adjusted (increased/decreased). According to the LCD device 1 of Fig. 1, assuming that an output voltage of the storage capacitor line driving circuit A (one of the storage capacitor line driving sections) serves as a reference output voltage, an output voltage of the storage capacitor line driving circuit B (the other of the storage capacitor line driving sections) can be fine-adjusted. Similarly, according to the LCD device 1 of Fig. 1, assuming that the output voltage of the storage capacitor line driving circuit B serves as the reference output voltage, the output voltage of the storage capacitor line driving circuit A can be fine-adjusted.

How to adjust the output voltages of the respective storage capacitor line driving circuits A and B is specifically described later in Fig. 2. In advance of the specific description, the reason why the output voltages of the respective storage capacitor line driving circuits A and B are adjusted.

In a case where the LCD device 1 is a 37/46/52/65-inch liquid crystal TV, for example and the LCD panel 2 has a large area, a capacitor generated by the internal wiring of the LCD panel 2, a wiring resistance occurring in the LCD panel 2, and/or the like is not uniform but has a distribution in the LCD panel 2. In view of this, for example, in a case where a low gradation side halftone solid screen display is carried out, gradation variation may be visible as luminance unevenness.

It seems that the luminance unevenness occurs due to variation in amount of electric charge to be charged in a liquid crystal capacitor. In view of this, an effective voltage to be applied to the liquid crystal capacitor is uniformed by fine-adjusting a voltage to be applied to a storage capacitor line, so that the variation in amount of electric charge is eliminated.

In order to fine-adjust a voltage to be applied to a storage capacitor line, a plurality of storage capacitor line driving circuits are provided (see Fig. 1), so that each of the plurality of storage capacitor line driving circuits can supply a different voltage to a corresponding storage capacitor line. A value of adjustment to a voltage to be applied to a storage capacitor line is minute. Therefore, the adjustment can be carried out easily in a case where a circuit is configured such that, assuming that one of voltages to be applied to two storage capacitor lines is a reference voltage, the other of the voltages to be applied to the two storage capacitor lines is relatively fine-adjusted.

The internal wiring of the LCD panel 2 has a resistance of approximately several tens Ω to several k Ω. However, ends of the respective storage capacitor lines may be connected to each other in the LCD panel 2. According to the arrangement, a wiring resistance of each of the storage capacitor lines can be uniform. This allows a further reduction in gradation variation occurring in the vicinity of a boundary between the upper screen MU and the lower screen MD.

Note here that according to an arrangement in which a storage capacitor line is provided for a corresponding pixel PIX, all storage capacitor lines are connected to each other and that according to an arrangement in which two storage capacitor lines are provided for a corresponding pixel PIX, storage capacitor lines to each of which a High electric potential is supplied are connected to each other and storage capacitor lines to each of which a Low electric potential is supplied are connected to each other.

Assume that the ends of the respective storage capacitor lines are connected to each other in the LCD panel 2. For example, an electric potential supplied from the storage capacitor line driving circuit B is supplied also to a storage capacitor line in the upper screen MU. This partially changes a storage capacitance and an electric potential which are stored in a storage capacitor and a pixel electrode, respectively, of each pixel in the upper screen MU.

However, the internal wiring of the LCD panel 2 has a resistance of approximately several tens Ω to several k Ω, and a resistance of the internal wiring varies for each pixel PIX. Accordingly, even in a case where the ends of the respective storage capacitor lines are connected to each other in the LCD panel 2, the storage capacitor lines are not identical in electric potential.

Further, as described earlier, the internal wiring of the LCD panel 2 has a resistance of approximately several tens Ω to several k Ω. Accordingly, an electric potential of each pixel PIX has a slope in the plane of the LCD panel 2. In a case where a direct-current voltage is applied to a storage capacitor line, the electric potential of the each pixel PIX is well-balanced with the slope and is stabilized. Same applies to a case where a rectangular wave is applied to a storage capacitor line, and the stabilized electric potential of the each pixel PIX has the slope.

Fig. 2 is a block diagram of the storage capacitor line driving circuits A and B in accordance with the present First Example. The storage capacitor line driving circuits A and B of Fig. 2 are obtained when, assuming, as an example, that n = 24, two upper and lower screens MU and MD are formed by equally dividing a display screen of the LCD panel 2. In this case, the display screen may be equally divided into the two upper and lower screens MU and MD in a direction perpendicular to a direction in which the storage capacitor lines extend.

According to this, the two upper and lower screens MU and MD which are continuous are evenly provided in parallel to the direction in which the storage capacitor lines extend.

Note here that the display screen of the LCD panel 2 may be equally divided into any number provided that the display screen is equally divided in the direction perpendicular to the direction in which the storage capacitor lines extend. For example, in a case where the display screen of the LCD panel 2 is equally divided into five, it is only necessary to provide five storage capacitor line driving circuits.

In Fig. 2, each of voltages VCSH1 through VCSH12 (storage capacitor voltages) to be supplied from the respective storage capacitor lines CSH1 through CSH12 corresponding to the upper screen MU is referred to as an upper CSH voltage. Each of voltages VCSH 13 through VCSH24 (storage capacitor voltages) to be supplied from the respective storage capacitor lines CSH 13 through CSH24 corresponding to the lower screen MD is referred to as a lower CSH voltage. Each of voltages VCSL1 through VCSL12 (storage capacitor voltages) to be supplied from the respective storage capacitor lines CSL1 through CSL12 corresponding to the upper screen MU is referred to as an upper CSL voltage. Each of voltages VCSL13 through VCSL24 (storage capacitor voltages) to be supplied from the respective storage capacitor lines CSL13 through CSL24 corresponding to the lower screen MD is referred to as a lower CSL voltage. The upper CSH voltage and the lower CSH voltage differ in value, and the upper CSL voltage and the lower CSL voltage differ in value.

The following description discusses operation such that in the storage capacitor line driving circuits A and B of Fig. 2, the lower CSH voltage is adjusted by fixing the upper CSH voltage, the upper CSL voltage, and the lower CSL voltage. A differential amplifier circuit ACSH receives, via a non-inverting input terminal thereof, a voltage to be supplied from the control circuit 6, and outputs the upper CSH voltage. The differential amplifier circuit ACSH has an output which is connected to an inverting input terminal thereof. Similarly, a differential amplifier circuit ACSL receives, via a non-inverting input terminal thereof, the voltage to be supplied from the control circuit 6, and outputs the upper CSL voltage. The differential amplifier circuit ACSL has an output which is connected to an inverting input terminal thereof. According to this, the fixed upper CSH voltage and the fixed upper CSL voltage are supplied to each of the storage capacitor lines.

A differential amplifier circuit ACSL' receives the upper CSL voltage via a non-inverting input terminal thereof, and outputs the lower CSL voltage. The differential amplifier circuit ACSL' has an output which is connected to an inverting input terminal thereof. According to this, the fixed lower CSL voltage is supplied to each of the storage capacitor lines.

Next, the following description discusses a lower CSH voltage adjustment circuit 7. The lower CSH voltage adjustment circuit 7 includes a resistor R1, a resistor R3, and a resistor R4, a resistance adjustment section R2, a differential amplifier circuit 8, a reference voltage circuit 10, a temperature correction circuit 11, and an adding circuit 12. The resistance adjustment section R2 has a resistance of R-DCP at both ends thereof. The reference voltage circuit 10 includes a resistor R5 and a resistor R6. The adding circuit 12 includes a differential amplifier circuit Adiff.

It is only necessary that the resistance adjustment section R2 allow a voltage to be adjusted by adjusting a resistance. For example, a pre-set variable resistor, a variable resistor, or a digital potentiometer can be used as the resistance adjustment section R2. Note that the digital potentiometer does not need to be a digital IC.

In the lower CSH voltage adjustment circuit 7, a supply voltage VLS is applied to one end of the resistor R1. The supply voltage VLS has a voltage of, for example, 15.6 V. Each of the other end of the resistor R1, one end of the resistor R3, and one end of the resistance adjustment section R2 is connected to a node RH. Each of the other end of the resistor R3, the other end of the resistance adjustment section R2, one end of the resistor R4, and an inverting input terminal of the differential amplifier circuit 8 is connected to a node RL. An output of the differential amplifier circuit 8 is connected to the node RL via a feedback resistor Rf. The other end of the resistor R4 is electrically grounded. A non-inverting input terminal of the differential amplifier circuit 8 is connected to a control input (node RW) of the resistance adjustment section R2. Note that in the differential amplifier circuit 8, a signal source resistance Rs is, for example, 30k Ω and the feedback resistor Rf is, for example, 3k Ω.

In the lower CSH voltage adjustment circuit 7, the upper CSH voltage is applied to one end of the resistor R5. The other end of the resistor R5 is connected to each of one end of the resistor R6, the output of the differential amplifier circuit 8, and a non-inverting input terminal of the differential amplifier circuit Adiff. The other end of the resistor R6 is connected to one end of the temperature correction circuit 11, and the other end of the temperature correction circuit 11 is electrically grounded. The temperature correction circuit 11 has a resistance of, for example, 0 Ω.

An output of the differential amplifier circuit Adiff is connected to an inverting input terminal via a feedback resistor Rf', and the inverting input terminal of the differential amplifier circuit Adiff is electrically grounded.

Note that in the adding circuit 12, each of an input resistance Ri and the feedback resistor Rf' is, for example, 10k Ω.

According to the lower CSH voltage adjustment circuit 7 having the arrangement described above, the adding circuit 12 adds (i) a reference voltage Vref obtained by dividing the upper CSH voltage by the resistor R5 and the resistor R6 and (ii) a minute voltage Vm to be supplied from the differential amplifier circuit 8, so as to generate the lower CSH voltage. Generation of the reference voltage Vref based on the upper CSH voltage allows adjustment of the lower CSH voltage by the minute voltage Vm.

Note that according to the above description, the adding circuit 12 is used in Fig. 2. However, the adding circuit 12 may be replaced with a subtracting circuit. This is because the storage capacitor line driving circuits A and B are arranged such that, assuming that an output voltage of one of the storage capacitor line driving circuits A and B serves as a reference output voltage, an output voltage of the other of the storage capacitor line driving circuits A and B can be fine-adjusted (increased/decreased).

Note that it is desirable that the minute voltage Vm be approximately ± 0.025% of the reference voltage Vref which is 100%. In a case where the reference voltage Vref is approximately 8 V as an example, it is desirable that the minute voltage Vm be approximately 2 mV. This is because gradation less varies in the plane of the LCD panel 2.

Fig. 3 is a graph showing a result of measurement of the upper CSH voltage and the lower CSH voltage. A voltage whose unit is a volt is a vertical axis of the graph. In a case where the resistance adjustment section R2 is a digital potentiometer (device) of 128 steps, the number of steps of the digital potentiometer is a horizontal axis of the graph. The graph of Fig. 3 shows a result of measurement of the upper CSH voltage and the lower CSH voltage every 10 steps. The lower CSH voltage is increased/decreased with resolution (within a range) of 128 steps.

The upper CSH voltage and the lower CSH voltage are identical in value at a point indicated by (1) in the graph of Fig. 3. A voltage at a point indicated by (2) in the graph of Fig. 3 shows a voltage at which no luminance unevenness occurs when a low gradation side halftone solid screen display is carried out in the LCD device 1. After the adjustment by the storage capacitor line driving circuits A and B, a difference in value between the upper CSH voltage and the lower CSH voltage is approximately several m V to several dozen m V.

According to the storage capacitor line driving circuits A and B taken as an example in Fig. 2, only the lower CSH voltage is an adjustment voltage. However, the present invention is not limited to this. The lower CSL voltage may be adjusted by fixing the lower CSH voltage. In this case, the differential amplifier circuit ACSL' receives the upper CSH voltage via the non-inverting input terminal thereof, and outputs the lower CSH voltage.

The lower CSH voltage adjustment circuit 7 may be used as a lower CSL voltage adjustment circuit by causing the reference voltage circuit 10 of the lower CSH voltage adjustment circuit 7 to receive the upper CSL voltage instead of the upper CSH voltage.

Both the upper CSH voltage and the upper CSL voltage may be adjusted by providing, as the lower CSL voltage adjustment circuit, another lower CSH voltage adjustment circuit 7 instead of the differential amplifier circuit ACSL'.

The upper CSH voltage, the upper CSL voltage, or both the upper CSH voltage and the upper CSL voltage may be adjusted by fixing the lower CSH voltage and the lower CSL voltage. In this case, the lower CSH voltage adjustment circuit 7 may be used as an upper CSH voltage adjustment circuit or an upper CSL voltage adjustment circuit by causing the differential amplifier circuit ACSH to output the lower CSH voltage, causing the differential amplifier circuit ACSL to output the lower CSH voltage, and causing the reference voltage circuit 10 of the lower CSH voltage adjustment circuit 7 to receive the lower CSH voltage or the lower CSL voltage instead of the upper CSH voltage.

In the example of Fig. 2, the display screen is divided into the two upper and lower screens MU and MD. However, a more highly accurate voltage adjustment can be carried out by dividing the display screen into three or more screens. The display screen can be divided horizontally or divided so as to form a lattice.

Fig. 4 illustrates that luminance unevenness has been eliminated in the LCD device 1 of the present First Example. (a) of Fig. 4 illustrates that luminance unevenness occurs in a conventional LCD device, and (b) of Fig. 4 illustrates that luminance unevenness has been eliminated in the LCD device 1 of the present First Example. According to the LCD device 1, an effective voltage to be applied to a liquid crystal capacitor is uniformed by fine-adjusting a voltage to be applied to a storage capacitor line, so that luminance unevenness is eliminated and a display characteristic is enhanced.

Note that according to the present First Example, each pixel PIX includes two subpixels and two storage capacitor lines in total are used for the respective two subpixels. However, the present invention is not limited to this. The present invention may be arranged such that the each pixel PIX includes no subpixel and a storage capacitor line is used for the each pixel PIX. In this case, it is only necessary that a differential amplifier circuit which is connected to the control circuit 6 be provided for a storage capacitor line in the upper screen MU of Fig. 2 and that only the lower CSH voltage adjustment circuit 7 be used in the lower screen MD of Fig. 2.

As described earlier, according to the LCD device 1 of the present First Example, in an active matrix LCD device including the storage capacitor lines CSH1, CSH2, ...CSH(p-1), CSHp and CSL1, CSL2, ...CSL(q-1), CSLq forming capacitors with pixel electrodes of respective pixels PIX, the screens MU and MD are formed by dividing the display screen, the storage capacitor lines CSH1, CSH2, ...CSH(p-1), CSHp and CSL1, CSL2, ...CSL(q-1), CSLq are divided into a plurality of adjacent storage capacitor lines for each of the upper screen MU and the lower screen MD, and a storage capacitor voltage to be applied to each of the storage capacitor lines CSH1, CSH2, ...CSH(p-1), CSHp and CSL1, CSL2, ...CSL(q-1), CSLq is individually set for each of the upper screen MU and the lower screen MD.

According to the LCD device 1 of the present First Example, the storage capacitor line driving circuits A and B are provided so as to correspond to the upper screen MU and the lower screen MD, respectively (the respective display regions), and assuming that a storage capacitor voltage to be supplied from one (e.g., the storage capacitor line driving circuit A) of the storage capacitor line driving circuits A and B is a reference storage capacitor voltage, a storage capacitor voltage to be supplied from the other (e.g., the storage capacitor line driving circuit B) of the storage capacitor line driving circuits A and B is increased/decreased.

According to these arrangements, luminance unevenness can be eliminated in the LCD device 1.

Note that according to the LCD device 1, in a case where signal electric potentials to be supplied to all pixel electrodes are identical, the display screen is divided into the upper screen MU and the lower screen MD in accordance with gradation variation to be displayed in the LCD panel 2.

### [Second Example]

Another example of the present invention is described below with reference to Figs. 5 and 6. Note that an arrangement which is not described in the present Second Example is identical to the arrangement described in the First Example. Note also that, for convenience, members having functions identical to those of the respective members illustrated in the drawings of the First Example are given respective identical reference numerals, and a description of those members is omitted here.

Fig. 5 is a block diagram of an LCD device 21 in accordance with the present Example 2. A first difference between the LCD device 21 and the LCD device 1 of the First Example is how to provide a signal line driving circuit and a scanning line driving circuit. According to the LCD device 1, the signal line driving circuit 3 and the scanning line driving circuit 4 are shared by the upper screen MU and the lower screen MD. In contrast, according to the LCD device 21, a signal line driving circuit 3A (first signal line driving section) and a scanning line driving circuit 4A (first scanning line driving section) are provided for an upper screen MU, and a signal line driving circuit 3B (second signal line driving section) and a scanning line driving circuit 4B (second scanning line driving section) are provided for a lower screen MD. The signal line driving circuit 3A and the signal line driving circuit 3B are provided on both sides of an LCD panel 2' of the LCD device 21. The signal line driving circuit 3A and the scanning line driving circuit 4A, and the signal line driving circuit 3B and the scanning line driving circuit 4B receive various signals from a control circuit 6. The LCD panel 2' is referred to as an LCD panel which is subjected to division drive.

A second difference between the LCD device 21 and the LCD device 1 of the First Example is how to provide a signal line (source line). According to the LCD device 1, the signal lines (source lines) S1, S2, ...S(n-1), Sn are shared by the upper screen MU and the lower screen MD. In contrast, according to the LCD device 21, the signal lines (source lines) S1, S2, ...S(n-1), Sn are divided into (i) signal lines (source lines, first signal lines) SA1, SA2, ...SA(n-1), SAn which are provided for the upper screen MU and (ii) signal lines (source lines, second signal lines) SB1, SB2, ...SB(n-1), SBn which are provided for the lower screen MD. The signal lines SA1, SA2, ...SA(n-1), SAn are driven by the signal line driving circuit 3A, and the signal lines SB1, SB2, ...SB(n-1), SBn are driven by the signal line driving circuit 3B.

According to the LCD device 21, which has the arrangement described above in the first difference and the second difference, luminance unevenness can be eliminated also in the LCD panel 2' in which driving is carried out for each of the upper screen MU and the lower screen MD that are obtained by dividing a display screen.

Note that according to the LCD device 21, as in the case of the LCD device 1 of the First Example, ends of respective storage capacitor lines CSH1, CSH2, ...CSH(p-1), CSHp are disconnected, and ends of respective storage capacitor lines CSL1, CSL2, ...CSL(q-1), CSLq are disconnected. In a case where ends of all the respective storage capacitor lines are disconnected, a boundary of gradation variation is conspicuous before a storage capacitor voltage is set. This (i) allows easy specification of a storage capacitor line for which a storage capacitor voltage should be set and (ii) enhances an effect of adjustment by increasing/decreasing a storage capacitor voltage.

According to the LCD device 21 having the arrangement described above, unlike the LCD panel 2 of the First Example, the LCD panel 2' is subjected to division drive. Therefore, the following description discusses the reason why an output voltage is adjusted by storage capacitor line driving circuits A and B in the LCD panel 2' which is subjected to division drive.

In a case where the LCD panel 2' is subjected to division drive, a capacitor generated by internal wiring of the LCD panel 2', a wiring resistance occurring in the LCD panel 2', and/or the like is not uniform but has a distribution in the LCD panel 2'. In view of this, for example, in a case where a low gradation side halftone solid screen display is carried out, gradation variation may be visible as luminance unevenness.

It seems that the luminance unevenness occurs due to variation in amount of electric charge to be charged in a liquid crystal capacitor. In view of this, an effective voltage to be applied to the liquid crystal capacitor is uniformed by fine-adjusting a voltage to be applied to a storage capacitor line, so that the variation in amount of electric charge is eliminated.

In order to fine-adjust a voltage to be applied to a storage capacitor line, a plurality of storage capacitor line driving circuits are provided (see Fig. 5), so that each of the plurality of storage capacitor line driving circuits can supply a different voltage to a corresponding storage capacitor line. A value of adjustment to a voltage to be applied to a storage capacitor line is minute. Therefore, the adjustment can be carried out easily in a case where a circuit is configured such that, assuming that one of voltages to be applied to two storage capacitor lines is a reference voltage, the other of the voltages to be applied to the two storage capacitor lines is relatively fine-adjusted.

Driving of the storage capacitor line driving circuits A and B is identical in the LCD device 21 of the present Second Example and the LCD device 1 of the First Example. Therefore, an explanation of the driving is omitted here.

Fig. 6 illustrates that luminance unevenness has been eliminated in the LCD device 21 of the present Second Example. (a) of Fig. 6 illustrates that luminance unevenness occurs in a conventional division driven panel in which a plane of an LCD panel is divided into two upper and lower regions and driving is carried out for each of the two upper and lower regions obtained by the division, and (b) of Fig. 6 illustrates that luminance unevenness has been eliminated in the LCD device 21 of the present Second Example. According to the LCD device 21, an effective voltage to be applied to a liquid crystal capacitor is uniformed by fine-adjusting a voltage to be applied to a storage capacitor line, so that luminance unevenness is eliminated and a display characteristic is enhanced.

Each of (a) through (e) of Fig. 7 illustrates that luminance unevenness due to gradation variation occurs in a plane of an LCD panel.

In order to eliminate luminance unevenness illustrated in each of (a), (d), and (e) of Fig. 7, it is only necessary to vertically divide a screen into two or three screens. In order to eliminate luminance unevenness illustrated in (c) of Fig. 7, it is only necessary to not vertically but horizontally divide a screen into two screens. In order to eliminate luminance unevenness illustrated in (b) of Fig. 7, it is only necessary to horizontally divide a screen into three screens and to vertically divide each of the screen on the left and the screen on the right into two screens.

As described earlier, even in a case where various types of luminance unevenness occur, it is only necessary to appropriately divide a screen and to provide a storage capacitor line driving circuit for each of screens obtained by the division. According to this, an effective voltage to be applied to a liquid crystal capacitor can be uniformed by fine-adjusting a voltage to be applied to a storage capacitor line, so that luminance unevenness can be eliminated.

As described earlier, according to the LCD device 21 of the present Second Example, in a case where a direction in which the signal lines S1, S2, ...S(n-1), Sn extend is a column direction, the display screen is divided into the upper screen MU and the lower screen MD in the column direction, and the signal lines S1, S2, ...S(n-1), Sn are divided into (i) the signal lines SA1, SA2, ... SA(n-1), SAn which are provided for the upper screen MU and (ii) the signal lines SB1, SB2, ...SB(n-1), SBn which are provided for the lower screen MD, and the LCD device 21 includes the signal line driving circuit 3A which supplies image data via the signal lines SA1, SA2, ...SA(n-1), SAn and the signal line driving circuit 3B which supplies image data via the signal lines SB1, SB2, ...SB(n-1), SBn.

According to the LCD device 21 of the present Second Example, in a case where a direction in which scanning lines G1, G2, ... G(m-1), Gm extend is a row direction, the scanning lines G1, G2, ...G(m-1), Gm are divided into (i) first scanning lines which are provided for the upper screen MU and (ii) second scanning lines which are provided for the lower screen MD, and the LCD device 21 includes the scanning line driving circuit 4A which selects, via the first scanning lines, pixels provided in the upper screen MU and the scanning line driving circuit 4B which selects, via the second scanning lines, pixels provided in the lower screen MD.

According to these arrangements, luminance unevenness can be eliminated also in the LCD device 21 in which driving is carried out for each of the upper screen MU and the lower screen MD that are obtained by dividing the display screen.

Note that as in the case of the LCD panel 2 of the First Example, according to the LCD panel 2', ends of the respective storage capacitor lines may be connected to each other. Namely, the LCD panel 2' may be arranged as follows: Ends of respective storage capacitor lines CSH1, CSH2, ...CSHα corresponding to the upper screen MU (storage capacitor lines that extend so as to pass through a first region) are connected to each other, and ends of respective storage capacitor lines CSL1, CSL2, ...CSLβ corresponding to the upper screen MU (storage capacitor lines that extend so as to pass through the first region) are connected to each other. Ends of respective storage capacitor lines CSH(α+1), CSH(α+2), ...CSHp corresponding to the lower screen MD (storage capacitor lines that extend so as to pass through a second region) are connected to each other, and ends of respective storage capacitor lines CSL(β+1), CSL(β+2), ...CSLq corresponding to the lower screen MD (storage capacitor lines that extend so as to pass through the second region) are connected to each other. Note that in the above description, for example α = p/2, β = q/2 (each of p and q is a positive even number). According to this arrangement, a wiring resistance of each of the storage capacitor lines can be uniform. This allows a further reduction in gradation variation occurring in the vicinity of the boundary between the upper screen MU and the lower screen MD.

Note here that according to an arrangement in which a storage capacitor line is provided for a corresponding pixel PIX, all storage capacitor lines are connected to each other and that according to an arrangement in which two storage capacitor lines are provided for a corresponding pixel PIX, storage capacitor lines to each of which a High electric potential is supplied are connected to each other and storage capacitor lines to each of which a Low electric potential is supplied are connected to each other.

Note that a storage capacitor voltage in accordance with the present embodiment may be (i) a signal waveform (not limited to a binary signal waveform) which changes between a High electric potential and a Low electric potential in accordance with a polarity of a signal electric potential to be written to a pixel electrode or (ii) a signal waveform which has a constant electric potential for each display region.

### [Summary of Embodiments]

Each of the LCD devices 1, 1', and 21 may be arranged such that the upper screen MU and the lower screen MD are obtained by equally dividing the display screen in a direction perpendicular to a direction in which the storage capacitor lines CSH1, CSH2, ...CSH(p-1), CSHp, CSL1, CSL2, ...CSL(q-1), CSLq extend.

According to this, the upper and lower screens MU and MD which are continuous are evenly provided in parallel to the direction in which the storage capacitor lines CSH1, CSH2, ...CSH(p-1), CSHp, CSL1, CSL2, ...CSL(q-1), CSLq extend.

Each of the LCD devices 1, 1', and 21 may be arranged to further include: the storage capacitor line driving circuits A and B which correspond to the respective upper and lower screens MU and MD, assuming that the storage capacitor voltage to be supplied from one of the storage capacitor line driving circuits A and B is a reference storage capacitor voltage, the each of the LCD devices 1, 1', and 21 increasing/decreasing the storage capacitor voltage to be supplied from the other of the storage capacitor line driving circuits A and B.

An effective voltage to be applied to a liquid crystal capacitor can be uniformed by increasing/decreasing (fine-adjusting) the storage capacitor voltage to be applied from the other of the storage capacitor line driving circuits A and B, so that luminance unevenness can be eliminated.

Each of the LCD devices 1, 1', and 21 may be arranged such that two of the storage capacitor lines are provided for a corresponding pixel PIX.

According to this, luminance unevenness can be eliminated in an LCD device in which each pixel PIX includes two subpixels.

Each of the LCD devices 1 and 1' may be arranged to further include: a signal line driving section 3 which drives signal lines S1, S2, ...S, Sn, in a case where a direction in which the signal lines S1, S2, ...S, Sn extend is a column direction, a signal line being provided for each pixel column to which a plurality of pixels PIX provided in the column direction belong. According to this, each of the signal lines S1, S2, ...S, Sn, which is continuous without being divided, can supply image data to pixels PIX including a pixel PIXn which is the farthest from the signal line driving circuit 3.

Each of the LCD devices 1 and 1' may be arranged to further include: a scanning line driving section 4 which drives scanning lines G1, G2, ...G, Gm, in a case where a direction in which the scanning lines G1, G2, ...G, Gm extend is a row direction, a scanning line being provided for each pixel row to which a plurality of pixels PIX provided in the row direction belong. According to this, each of the scanning lines G1, G2, ...G, Gm, which is continuous without being divided, can select pixels PIX including a pixel PIXn which is the farthest from the scanning line driving circuit 4.

Each of the LCD devices 1 and 1' may be arranged such that ends of the respective storage capacitor lines CSH1, CSH2, ...CSH(p-1), CSHp, CSL1, CSL2, ...CSL(q-1), CSLq are connected to each other.

According to the arrangement, a wiring resistance of each of the storage capacitor lines can be uniform. This allows a further reduction in gradation variation for each display region. Note here that according to an arrangement in which a storage capacitor line is provided for a corresponding pixel PIX, all storage capacitor lines are connected to each other and that according to an arrangement in which two storage capacitor lines are provided for a corresponding pixel PIX, storage capacitor lines to each of which a High electric potential is supplied are connected to each other and storage capacitor lines to each of which a Low electric potential is supplied are connected to each other.

Each of the LCD devices 1 and 1' may be arranged such that ends of all the respective storage capacitor lines CSH1, CSH2, ...CSH(p-1), CSHp, CSL1, CSL2, ...CSL(q-1), CSLq are disconnected. In a case where ends of all the respective storage capacitor lines are disconnected, a boundary of gradation variation is conspicuous before a storage capacitor voltage is set. This (i) allows easy specification of a storage capacitor line for which a storage capacitor voltage should be set and (ii) enhances an effect of adjustment by increasing/decreasing a storage capacitor voltage.

The LCD device 21 may be arranged such that: in a case where a direction in which signal lines S1, S2, ...S(n-1), Sn extend is a column direction, the display screen is divided into the upper screen MU and the lower screen MD in the column direction; the signal lines S1, S2, ... S(n-1), Sn are divided into signal lines SA1, SA2, ...SA(n-1), SAn provided in the upper screen MU and signal lines SB1, SB2, ...SB(n-1), SBn provided in the lower screen MD; and the LCD device 21 further includes: a signal line driving circuit 3A which supplies image data via the signal lines SA1, SA2, ...SA(n-1), SAn to pixel electrodes of respective pixels PIX provided in the upper screen MU; and a signal line driving circuit 3B which supplies image data via the signal lines SB1, SB2, ...SB(n-1), SBn to pixel electrodes of respective pixels PIX provided in the lower screen MD.

The LCD device 21 may be arranged such that: in a case where a direction in which scanning lines G1, G2, ...G(m-1), Gm extend is a row direction, the scanning lines G1, G2, ...G(m-1), Gm are divided into first scanning lines provided in the upper screen MU and second scanning lines provided in the lower screen MD; and the LCD device 21 further includes: a scanning line driving circuit 4A which selects, via the first scanning lines, the pixels PIX provided in the upper screen MU; and a scanning line driving circuit 4B which selects, via the second scanning lines, the pixels PIX provided in the lower screen MD.

According to these arrangements, luminance unevenness can be eliminated also in the LCD device 21 in which driving is carried out for each of the upper screen MU and the lower screen MD that are obtained by dividing the display screen.

The LCD device 21 may be arranged such that storage capacitor lines CSH1, CSH2, ...CSHα, CSL1, CSL2, ...CSLβ which correspond to the pixels PIX provided in the upper screen MU are connected to each other and storage capacitor lines CSH(α+1), CSH(α+2), ...CSHp, CSL(β+1), CSL(β+2), ...CSLq which correspond to the pixels PIX provided in the lower screen MD are connected to each other. Note here that according to an arrangement in which a storage capacitor line is provided for a corresponding pixel PIX, all storage capacitor lines are connected to each other and that according to an arrangement in which two storage capacitor lines are provided for a corresponding pixel PIX, storage capacitor lines to each of which a High electric potential is supplied are connected to each other and storage capacitor lines to each of which a Low electric potential is supplied are connected to each other.

The LCD device 21 may be arranged such that ends of all the respective storage capacitor lines CSH1, CSH2, ...CSHα, CSL1, CSL2, ...CSLβ, CSH(α+1), CSH(α+2), ...CSHp, CSL(β+1), CSL(β+2), ...CSLq are disconnected. In a case where ends of all the respective storage capacitor lines are disconnected, a boundary of gradation variation is conspicuous before a storage capacitor voltage is set. This (i) allows easy specification of a storage capacitor line for which a storage capacitor voltage should be set and (ii) enhances an effect of adjustment by increasing/decreasing a storage capacitor voltage.

The present invention is not limited to the description of the embodiments above, but may be altered by a skilled person within the scope of the claims. An embodiment based on a proper combination of technical means disclosed in different embodiments is encompassed in the technical scope of the present invention.

### Industrial Applicability

According to an LCD device of the present invention, it is possible to eliminate luminance unevenness due to gradation variation occurring in a plane of even a division driven LCD panel. Therefore, the LCD device of the present invention can be suitably used for a large LCD panel.

### Reference Signs List

- 1, 1', 21: LCD Device
- 2, 2': LCD Panel
- 3: Signal Line Driving Circuit (Signal Line Driving Section)
- 3A: Signal Line Driving Circuit (First Signal Line Driving Section)
- 3B: Signal Line Driving Circuit (Second Signal Line Driving Section)
- 4: Scanning Line Driving Circuit (Scanning Line Driving Section)
- 4A: Scanning Line Driving Circuit (First Scanning Line Driving Section)
- 4B: Scanning Line Driving Circuit (Second Scanning Line Driving Section)
- 6: Control Circuit
- 7: Lower CSH Voltage Adjustment Circuit
- 8,: ACSH, ACSL, Adiff Differential Amplifier Circuit
- 10: Reference Voltage Circuit
- 11: Temperature Correction Circuit
- 12: Adding circuit
- A, B: Storage Capacitor Line Driving Circuit
- CSH1, CSH2, ...CSH(p-1), CSHp: Storage Capacitor Line
- CSLq1, CSL2, ...CSL(q-1), CSLq: Storage Capacitor Line
- CSH1-CSH12: Storage Capacitor Line
- CSH13-CSH24: Storage Capacitor Line
- CSL1-CSL12: Storage Capacitor Line
- CSL13-CSL24: Storage Capacitor Line
- CSH1, CSH2, ...CSHα: Storage Capacitor Line
- CSL1, CSL2, ...CSLβ: Storage Capacitor Line
- CSH(α+1), CSH(α+2), ...CSHp: Storage Capacitor Line
- CSL(β+1), CSL(β+2), ...CSLq: Storage Capacitor Line
- G1, G2, ...G, Gm: Scanning Line (Scanning Line, First Scanning Line, Second Scanning Line)
- MD: Lower Screen (Display Region, Second Display Region)
- MU: Upper Screen (Display Region, First Display Region)
- PIX, PIXn: Pixel
- R1, R3-R6: Resistor
- R2: Resistance Adjustment Section
- RH, RL, RW: Node
- Rf, Rf': Feedback Resistor
- Ri: Input Resistance
- Rs: Signal Source Resistance
- S1, S2, ...S, Sn: Signal Line
- SA1, SA2, ...SA, SAn: Signal Line (First Signal Line)
- SB1, SB2, ...SB, SBn: Signal Line (Second Signal Line)
- VCSH1-VCSH12, VCSH13-VCSH24, VCSL1-VCSL12, VCSL13-VCSL24: Voltage (Storage Capacitor Voltage)
- VLS: Supply Voltage
- Vm: Minute Voltage
- Vref: Reference Voltage

## Claims

1. An active matrix LCD device comprising:
storage capacitor lines forming capacitors with pixel electrodes of respective pixels,
said active matrix LCD device dividing a display screen into a plurality of display regions,
the storage capacitor lines being divided into a plurality of adjacent storage capacitor lines for each of the plurality of display regions, and
a storage capacitor voltage being set individually for the each of the plurality of display regions, the storage capacitor voltage being applied to each of the storage capacitor lines.

2. The active matrix LCD device as set forth in claim 1, wherein the plurality of display regions are obtained by equally dividing the display screen in a direction perpendicular to a direction in which the storage capacitor lines extend.

3. The active matrix LCD device as set forth in claim 1 or 2, further comprising:
a plurality of storage capacitor line driving sections which correspond to the respective plurality of display regions,
assuming that the storage capacitor voltage to be supplied from one of the plurality of storage capacitor line driving sections is a reference storage capacitor voltage, said active matrix LCD device increasing/decreasing the storage capacitor voltage to be supplied from at least one of the other storage capacitor line driving sections.

4. The active matrix LCD device as set forth in any one of claims 1 through 3, wherein two of the storage capacitor lines are provided for a corresponding pixel.

5. The active matrix LCD device as set forth in any one of claims 1 through 4, further comprising:
a signal line driving section which drives signal lines,
in a case where a direction in which the signal lines extend is a column direction, a signal line being provided for each pixel column to which a plurality of pixels provided in the column direction belong.

6. The active matrix LCD device as set forth in any one of claims 1 through 5, further comprising:
a scanning line driving section which drives scanning lines,
in a case where a direction in which the scanning lines extend is a row direction, a scanning line being provided for each pixel row to which a plurality of pixels provided in the row direction belong.

7. The active matrix LCD device as set forth in claim 6, wherein ends of the respective storage capacitor lines are connected to each other.

8. The active matrix LCD device as set forth in claim 6, wherein ends of all the respective storage capacitor lines are disconnected.

9. The active matrix LCD device as set forth in any one of claims 1 through 4, wherein:
in a case where a direction in which signal lines extend is a column direction,
the display screen is divided into a first display region and a second display region in the column direction;
the signal lines are divided into first signal lines provided in the first display region and second signal lines provided in the second display region; and
said active matrix LCD device further includes:
a first signal line driving section which supplies image data via the first signal lines to pixel electrodes of respective pixels provided in the first display region; and
a second signal line driving section which supplies image data via the second signal lines to pixel electrodes of respective pixels provided in the second display region.

10. The active matrix LCD device as set forth in claim 9, wherein:
in a case where a direction in which scanning lines extend is a row direction,
the scanning lines are divided into first scanning lines provided in the first display region and second scanning lines provided in the second display region; and
said active matrix LCD device further includes:
a first scanning line driving section which selects, via the first scanning lines, the pixels provided in the first display region; and
a second scanning line driving section which selects, via the second scanning lines, the pixels provided in the second display region.

11. The active matrix LCD device as set forth in claim 10, wherein storage capacitor lines which correspond to the pixels provided in the first display region are connected to each other and storage capacitor lines which correspond to the pixels provided in the second display region are connected to each other.

12. The active matrix LCD device as set forth in claim 10, wherein ends of all the respective storage capacitor lines are disconnected.
